# EUROPEAN PATENT APPLICATION

(11) **EP 3 076 679 A1**
(43) Date of publication of application: **05.10.2016**
(21) Application number: 14865373.6
(22) Date of filing: 26.11.2014
(51) Int. Cl.: H04N 21/431

(54) **DESKTOP DISPLAY METHOD AND DEVICE, AND SMART TELEVISION**

(30) Priority: 29.11.2013 CN 201310632037
(71) Applicant: Le Shi Zhi Xin Electronic Technology (Tianjin) Limited, Beijing 100025 (CN)
(72) Inventor: TONG, Yonghui, Beijing 100025 (CN); TIAN, Jiazi, Beijing 100025 (CN); CHU, Chao, Beijing 100025 (CN)
(74) Representative: Viering, Jentschura & Partner mbB Patent- und Rechtsanwälte
(86) International application number: PCT/CN2014/092303
(87) International publication number: WO 2015/078377

(57) **Abstract**

Disclosed is a desktop display method, which is applied to a smart television. The smart television comprises at least two desktops. In the case where a first desktop continuously displays a content, the method comprises: acquiring a launching command of a second desktop; and adjusting a display manner of the second desktop, and according to the adjusted display manner, displaying the second desktop so that the second desktop is displayed above the first desktop in a floating layer manner and the first desktop and the second desktop are displayed in the same window. This manner makes the first desktop and the second desktop to be displayed in the same window and the contents of the two desktops to be displayed simultaneously, so that each of the desktops can display respective content to a maximum extent in one window, a user can see the contents of the two desktops simultaneously via one window other than in the form of parallel desktops, thereby improving the viewing experience and perception of the user.

## Description

### CROSS-REFERENCE

This application is based upon Chinese Patent Application 201310632037.1, titled "Desktop Display Method and Device, and Smart Television", filed November 29, 2013, the entire contents of which are incorporated herein by reference.

### TECHNICAL FIELD

The present application relates to the field of TV application technologies, and more particularly, to a desktop display method, a desktop display device and a smart TV.

### BACKGROUND

When the video content is played in one page, if another page with different functions is launched, such as display text or other pages different from the video, then a user can only see the new page which is lately launched, and the page for playing the video is stopped at this moment.

In the prior art, if one window is opened to play such contents like playing video and displaying text, or the like, and then another window is opened, then the two windows have to be displayed in parallel since it is desirable to know the contents displayed in the two windows at the same time. In this occasion, if the two windows are displayed in a display range for one window without changing the display range of the two windows, then it will absolutely cause that the first window shades the second window or the second window shades the first window, so that the content played in the first window cannot be known while knowing the display content of the second window.

While on a TV, if two desktops that display different contents are opened, for instance, a first desktop which plays TV programs and a second desktop which displays other contents (usually static texts, pictures or program icons), the two different desktops will be displayed in full screen. In the prior art, if the second desktop is opened while the first desktop is playing programs, different desktops cannot be displayed in parallel in the TV; therefore, the only way is to switch the first desktop into the second desktop in the prior art, which disables a user to know the playing progress and playing content of the programs in the first desktop while viewing the display content of the second desktop.

Although multiple windows which are simultaneously displayed can be implemented via multiple window arrangement in present operating systems like a computer or the like, the multiple windows are required to be displayed in parallel for the purpose of seeing the video playing content and the content in a new page at the same time. In the case that the display range is fixed, it is apparent that the sizes of both the video playing page and the new page launched lately need to be reduced to a certain extent so that the two windows can be displayed in the certain display range, and parallel display of multiple different functional pages cannot be implemented on TV, such that the prior art enables the user to only see the new page launched lately, but fails to know the display content in the new page and the playing content in the video page at the same time, thereby limiting the usage experience of the user.

### SUMMARY

In light of this, the present application provides a desktop display method, which can display a first desktop and a second desktop in a same window, and display the contents of the two desktops at the same time.

To realize the foregoing objects, the present application provides the following technical solutions.

A desktop display method is applied to a smart TV, wherein the smart TV includes at least two desktops, and in the case that the first desktop continuously displays contents, the method includes:
acquiring a launching command of a second desktop; and
adjusting the display mode of the second desktop and displaying the second desktop according to the adjusted display mode, so that the second desktop is displayed above the first desktop in a manner of a floating layer, and the first desktop and the second desktop are displayed in a same window.

Preferably, after acquiring the launching command of the second desktop, the method further includes:
determining that the first desktop and the second desktop are desktops that can be displayed in the same window; and
generating a command for changing the display mode of the second desktop.

Preferably, adjusting the display mode of the second desktop particularly includes: adjusting the display mode of the second desktop according to the command for changing the display mode of the second desktop, which particularly includes: adjusting the display mode of the second desktop particularly includes: adjusting the display mode of the second desktop according to the command for changing the display mode of the second desktop, which particularly includes: activating a second attribute adjustment function according to the command for changing the display mode of the second desktop, wherein the second attribute adjustment function included an attribute of the display content of the second desktop which needs to be adjusted and a corresponding attribute value; and
amending the attribute of the display contents of the second desktop according to the second attribute adjustment function.

Preferably, the display content of the second desktop at least includes a background that may be amended; and
adjusting the attribute of the display content of the second desktop includes: improving the transparency of the background of the second desktop, or switching the background of the second desktop into a transparent background, so that the content of the first desktop is visible via the background of the second desktop.

Preferably, the display content of the second desktop further includes: icons, texts, pictures, videos played in the window, or any one or more than one kind of them and
adjusting the attribute of the display content of the second desktop includes: improving the brightness of the icons, improving the brightness of the texts, changing the color of the texts, changing the color of the icons and/or adding a bright outline border at the perimeter of the icons.

Preferably, after acquiring the launching command of the second desktop, the method further includes:
adjusting the display mode of the first desktop and displaying the first desktop according to the adjusted display mode.

Preferably, adjusting the display mode of the first desktop and displaying the first desktop according to the adjusted display mode particularly includes:
generating a command for changing the display mode of the first desktop according to the launching command of the second desktop;
activating a first attribute adjustment function according to the command for changing the display mode of the first desktop, wherein the first attribute adjustment function includes an attribute of the display content of the first desktop and a corresponding attribute value; and
adjusting the attribute of the display content of the first desktop according to the first attribute adjustment function.

Preferably, the display content of the first desktop includes: videos and/or texts, wherein the sound of the video is synchronously played when the video is played; and
adjusting the attribute of the display content of the first desktop includes: reducing the brightness of the display content of the first desktop, and/or, reducing the sound volume of the video played in the first desktop.

The present application further provides a desktop display device which is applied to a smart TV, wherein the smart TV at least includes two desktops, and in the case that the first desktop continuously displays contents. The device includes:
a command acquisition module configured to acquire a launching command of the second desktop; and
a display adjustment module configured to adjust the display mode of the second desktop and display the second desktop according to the adjusted display mode, so that the second desktop is displayed on the first desktop in a manner of a floating layer, and the first desktop and the second desktop are displayed in a same window.

Preferably, the device further includes a desktop determination module configured to, after the_command acquisition module acquires the launching command of the second desktop, determine that the first desktop and the second desktop are desktops that can be displayed in the same window, and generate the command for changing the display mode of the second desktop.

Preferably, adjusting the display mode of the second desktop by the display adjustment module particularly includes: adjusting the display mode of the second desktop according to the command for changing the display mode of the second desktop.

Preferably, adjusting the display mode of the second desktop according to the command for changing the display mode of the second desktop particularly includes:
activating a second attribute adjustment function according to the command for changing the display mode of the second desktop, wherein the second attribute adjustment function includes the attribute of the display content of the second desktop which needs to be adjusted and a corresponding attribute value; and
amending the attribute of the display contents of the second desktop according to the second attribute adjustment function.

Preferably, the display content of the second desktop at least includes a background that can be amended, and the display adjustment module configured to adjust the attribute of the display content of the second desktop particularly includes:
improving the transparency of the background of the second desktop, or switching the background of the second desktop into a transparent background, so that the content of the first desktop is visible via the background of the second desktop.

Preferably, the display content of the second desktop further includes: icons, texts, pictures, videos played in the window, or at least one of them; and
the display adjustment module further configured to adjust the attribute of the display content of the second desktop particularly includes: improving the brightness of the icons, improving the brightness of the texts, changing the color of the texts, changing the color of the icons or adding a bright outline border at the perimeter of the icons.

Preferably, after acquiring the command for starting the second desktop, the display adjustment module is further configured to adjust the display mode of the first desktop, and display the first desktop according to the adjusted display mode, wherein:
adjusting the display mode of the first desktop and displaying the first desktop according to the adjusted display mode particularly include:
   generating a command for changing the display mode of the first desktop according to the launching command of the second desktop;
   activating a first attribute adjustment function according to the command for changing the display mode of the first desktop, wherein the first attribute adjustment function includes the attribute of the display content of the first desktop and a corresponding attribute value; and
   adjusting the attribute of the display content of the first desktop according to the first attribute adjustment function.

Preferably, the display content of the first desktop includes: videos and/or texts, wherein the sound of the video is synchronously played when the video is played; and
the display adjustment module configured to adjust the attribute of the display content of the first desktop particularly includes: reducing the brightness of the display content of the first desktop and/or reducing the sound volume played in the first desktop.

The present application further provides a smart TV, which includes the above desktop display device.

It can be seen from the above technical solutions that in the desktop display method provided by the present application, the launching command of the second desktop is acquired in the case that the first desktop continuously displays contents, the display mode of the second desktop is adjusted, and then the second desktop is displayed according to the adjusted display mode. This manner makes the first desktop and the second desktop to be displayed in the same window, and the contents of the two desktops are displayed at the same time, so that each desktop can display the contents respectively to the maximum extent in one window, and the user may view the contents of the two desktops at the same time via one window other than in the form of parallel desktops, thereby improving the viewing experience and perception of the user is improved.

### BRIEF DESCRIPTION OF THE DRAWINGS

In order to explain the technical solutions in the embodiments of the present application or in the prior art more clearly, the drawings used in the descriptions of the embodiments or the prior art will be simply introduced hereinafter. It is apparent that the drawings described hereinafter are merely some embodiments of the present application, and those skilled in the art may also obtain other drawings according to these drawings without going through creative efforts.

Fig. 1 is a schematic diagram showing flowchart of a desktop display method according to an embodiment of the present application; and

Fig. 2 is a schematic diagram showing a desktop display device according to an embodiment of the present application.

### PREFERRED EMBODIMENTS

In order to make a better understanding of the technical solutions in the present application to those skilled in the art, the technical solutions in the embodiments of the present application will be described clearly and completely with reference to the drawings in the embodiments of the present application. Apparently, the embodiments described are merely partial embodiments of the present application, rather than all embodiments. Other embodiments figured out by those skilled in the art on the basis of the embodiments of the invention without going through creative efforts shall all fall within the protection scope of the present application.

A desktop display method and a desktop display device provided by the present application are applied to a smart TV, wherein the smart TV includes at least two desktops, i.e., a first desktop and a second desktop. In the case that the first desktop continuously displays contents, various probable embodiments of the present application will be illustrated hereinafter.

### First embodiment

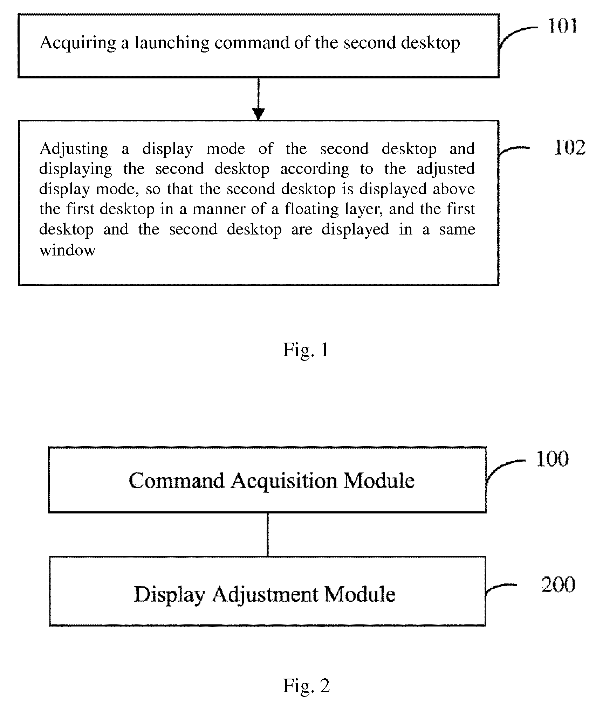

Referring to Fig. 1, a desktop display method provided by the present application includes:
In step 101, a launching command of the second desktop is acquired.

The desktop display method of the present application is applied to a smart TV, wherein the smart TV may have a plurality of desktops with different functions, for example, a signal source desktop, a carousel desktop, an on-demand desktop, an application desktop and a search desktop. The present application is not limited to the exemplified desktops. The signal source desktop is used to play conventional television signals, and the video contents in the external storage equipment are also played in the signal source desktop. The carousel desktop is used to play network TV programs. The on-demand desktop may display the contents of programs on-demand for a user to select. The application desktop includes various applications that have been installed in the TV, and the usage state of the application which is equivalent to a TV desktop, is also an application desktop. The search desktop includes a search program, which may search and display the program contents and TV setting parameters or the like, which are required by the user. Further, for example, said first desktop can be a carousel desktop or a signal source desktop, and said second desktop can be an on-demand desktop, an application desktop or a search desktop. The carousel desktop and the signal source desktop generally play videos, and the on-demand desktop, the application desktop or the search desktop display static texts or icons. Specifically, for example, the situation of the step 101 may be, but not limited to that in the case that the current desktop (first desktop) is a carousel desktop which continuously displays contents, and the user further launches an application desktop (second desktop).

Furthermore, the second desktop of the present application is launched in the case that the first desktop continuously displays contents. For example, the first desktop may be playing TV programs or displaying other contents, and the launching command of the second desktop is acquired at this moment. For example, the launching command of the second desktop may either be sent by pressing a key ofa remote controller, or be inputted by the user via a voice command. The specific form of the launching command of the second desktop is not limited in the present application.

In step 102, the display mode of the second desktop is adjusted and the second desktop is displayed according to the adjusted display mode, so that the second desktop is displayed on the first desktop in a manner of a floating layer, and the first desktop and the second desktop are displayed in a same window.

Specificically, for example, the situation of the step 102 may be, but not limited to that after acquiring the launching command of an application desktop (second desktop), the present application further adjusts the display mode of the application desktop (second desktop), and displays the application desktop (second desktop) according to the adjusted display mode, so that the application desktop (second desktop) is displayed above a carousel desktop (first desktop) in a manner of a floating layer, and the carousel desktop (first desktop) and the application desktop (second desktop) are displayed in a same window.

### Second embodiment

On the basis of the foregoing first embodiment, the present application may be further expanded. In the second embodiment, the present application after performing the step 101 and before performing the step 102, further includes:
determining that the first desktop and the second desktop are desktops that can be displayed in the same window; and
generating a command for changing the display mode of the second desktop.

In the embodiment, after the launching command of the second desktop is acquired in the case that the first desktop continuously displays contents, it may be determined that whether the display mode of the second desktop needs to be adjusted, i.e., it is determined that whether the first desktop and the second desktop are two desktops that can be displayed in the same window. Because some desktops (same or different kinds of desktops) can be displayed in the same window while some cannot, it needs to determine whether the first desktop and the second desktop are the desktops that can be displayed in the same window. For example, the carousel desktop and the application desktop can be displayed in the same window, but the carousel desktop and the signal source desktop cannot. If the first desktop and the second desktop are the desktops that can be displayed in the same window (i.e., display mode of the second desktop needs to be adjusted), the second desktop needs to be adjusted. Therefore, a command for changing the display mode of the second desktop is further generated in the embodiment, so as to adjust the display mode of the second desktop.

### Further expansion of the first and the second embodiments

In the foregoing first or second embodiment, adjusting the display mode of the second desktop may particularly include: adjusting the display mode of the second desktop according to the command for changing the display mode of the second desktop, which particularly includes: activating a second attribute adjustment function according to the command for changing the display mode of the second desktop, wherein the second attribute adjustment function includes the attribute of the display content of the second desktop which needs to be adjusted and a corresponding attribute value; and amending the attribute of the display contents of the second desktop according to the second attribute adjustment function.

Further, after generating the command for changing the display mode of the second desktop, the second attribute adjustment function may be activated in the present application according to the command. The second attribute adjustment function includes various attributes of the display content of the second desktop and corresponding attribute values. In other words, the adjustment of display mode of the second desktop is to amend the attribute of the display content of the second desktop according to the attributes of the second attribute adjustment function and the corresponding attribute values.

Specifically, for example, the first desktop usually plays video contents in full screen. Because the display content of the second desktop is generally different from the first desktop, i.e., the second desktop does not play the video contents in full screen usually, and pictures, application icons or text information may be displayed in the second desktop. Furthermore, the second desktop may have a changeable background, for example, the transparency of the background may be changed, or the background may be replaced by other background. All the pictures, application icons or text information is displayed on the background.

Further, adjusting the attribute of the display content of the second desktop may include: improving the transparency of the background of the second desktop, so that the content of the first desktop is visible via the background of the second desktop. The first desktop plays the program contents in full screen, and the second desktop may also display contents in full screen. By improving the transparency of the background of the second desktop, the display content of the first desktop is visible via the transparent background of the second desktop. Therefore, the user may see the content of the first desktop via the transparent background of the second desktop while the display content of the second desktop is still visible.. A value may be pre-defined for the transparency of the background of the second desktop, and the transparency is directly adjusted into a certain value when adjusting the transparency of the background of the second desktop. Certainly, the background can be adjusted to be completely transparent.

Besides, the background of the second desktop may be a replaceable picture, and the background picture of the second desktop is directly switched into a picture having transparency or being completely transparent while adjusting the display mode of the second desktop. When displaying the first desktop and the second desktop at the same time, the text color of the display content in the second desktop may be changed into bright color, or the brightness of the text may be improved. When the display content is an icon, the color of the icon may be changed, or the brightness of the icon may be improved, or a bright outline border may be added for the icon. The embodiment of the present application includes, but not limited to the foregoing form of adjusting the display mode of the second desktop.

The background of the second desktop needs to be adjusted to be transparent, so that the contents of the first desktop are displayed via the transparent background of the second desktop. In the embodiment of the present application, the adjusted second desktop is displayed in the display screen, and the second desktop is displayed above the first desktop in a manner of a floating layer; moreover, the first desktop and the second desktop can be displayed in full screen at the same time. Specifically, for example, when the first desktop is a carousel desktop and the second desktop is an application desktop, the carousel desktop will not be switched into the application desktop directly, while application icons in the application desktop are displayed at the front end of the carousel desktop in a manner of a floating layer while the carousel desktop is playing programs. At this moment, display areas other than application icons and necessary options of the application desktop can be changed to be transparent. Therefore, the user may partially (or entirely) know the contents that are played by the carousel desktop via the transparent background of the application desktop.

Besides, the display mode of the first desktop may be adjusted while adjusting the display mode of the second desktop as well according to the present invention, which particularly includes: adjusting the display mode of the first desktop and displaying the first desktop according to the adjusted display mode. Adjusting the display mode of the first desktop and displaying the first desktop according to the adjusted display mode particularly includes: generating a command for changing the display mode of the first desktop according to the launching command of the second desktop; activating a first attribute adjustment function according to the command for changing the display mode of the first desktop, wherein the first attribute adjustment function includes the attribute of the display content of the first desktop and a corresponding attribute value; and adjusting the attribute of the display content of the first desktop according to the first attribute adjustment function.

The display mode of the first desktop, the command for changing the display mode of the first desktop, the first attribute adjustment function, the attribute of the display content of the first desktop and the corresponding attribute value, or the like, are all similar to the foregoing second desktop, and will not be repeatedly elaborated herein.

The display content of the first desktop may include: videos or texts, wherein the sound of the video is synchronously played when the video is played. Adjusting the display mode of the first desktop may include: reducing the brightness of the display content of the first desktop, reducing the sound volume of the first desktop, or other analogues. After the second desktop is launched, the content of the second desktop has higher attention. At this moment, the brightness of the display content of the first desktop may be reduced, or the sound volume played by the first desktop may be reduced. Certainly, the volume may be directly reduced to 0 or reduced to a predetermined value, thereby avoiding the attention to the second desktop.

Preferably, while the first desktop and the second desktop of the present application are displayed in the same window, the second desktop has a higher priority to acquire commands. When the first desktop and the second desktop are displayed at the same time, other operating command may further be acquired. At this moment, if the operating command is only directed to the first desktop, then some operations in the first desktop will not affect the second desktop, for example, changing the playing channel of the first desktop, changing the playing volume of the first desktop or the like. However, if one command may control both the first desktop and the second desktop, such a command is only effective to the second desktop, because the second desktop is launched later than the first desktop, i.e., the second desktop has a higher priority to acquire commands.

According to the desktop display method provided by the present application, in the case that the first desktop continuously displays contents, the launching command of the second desktop is acquired, the display mode of the second desktop is adjusted, and then the second desktop is displayed according to the adjusted display mode. This manner makes the first desktop and the second desktop to be displayed in the same window, and the contents of the two desktops may be displayed in full screen at the same time, so that each desktop can display the contents respectively to the maximum extent in one window, and the user may view the contents of the two desktops at the same time via one window other than in the form of parallel desktops, thereby improving the viewing experience and perception of the user.

Further, according to the desktop display method provided by the embodiment of the present application, in the case that the first desktop continuously displays contents, the launching command of the second desktop is acquired, the display mode of the second desktop is adjusted, and then the second desktop is displayed according to the adjusted display mode, which particularly includes: generating a command for changing the display mode of the first desktop according to the launching command of the second desktop; activating a first attribute adjustment function according to the command for changing the display mode of the first desktop, wherein the first attribute adjustment function includes the attribute of the display content of the first desktop and a corresponding attribute value; and adjusting the attribute of the display content of the first desktop according to the first attribute adjustment function. The adjustment of the first desktop is started via the launching command of the second desktop at the same time, wherein the display content of the first desktop may include: videos or texts, wherein the sound of the video is synchronously played when the video is played; and adjusting the attribute of the display content of the first desktop includes: reducing the brightness of the display content of the first desktop, and/or, reducing the sound volume of the video played in the first desktop. This manner makes the first desktop and the second desktop to be displayed in the same window, and the contents of the two desktops are displayed at the same time, so that each desktop can display the contents respectively to the maximum extent in one window, and the user may view the contents of the two desktops at the same time via one window other than in the form of parallel desktops, thereby improving the viewing experience and perception of the user.

### Third embodiment

The third embodiment of the present application provides a desktop display device which is corresponding to the forgoing desktop display method. Referring to Fig. 2, the desktop display device provided by the fourth embodiment is applied to a smart TV, wherein the smart TV includes at least two desktops. In the case that the first desktop continuously displays contents, the desktop display device of the present application includes a command acquisition module 100 and a display adjustment module 200. The command acquisition module 100 is used to acquire a launching command of the second desktop, and the display adjustment module 200 is used to adjust the display mode of the second desktop, and display the second desktop according to the adjusted display mode, so that the first desktop and the second desktop are displayed in a same window.

### Fourth embodiment

On the basis of the third embodiment, the desktop display device of the fourth embodiment of the present application further includes a desktop determination module used to, after the command acquisition module acquires the launching command of the second desktop, determine that the first desktop and the second desktop are desktops that can be displayed in the same window, and generate the command for changing the display mode of the second desktop.

Adjusting the display mode of the second desktop by the display adjustment module particularly includes: adjusting the display mode of the second desktop according to the command for changing the display mode of the second desktop. And adjusting the display mode of the second desktop according to the command for changing the display mode of the second desktop particularly includes: activating a second attribute adjustment function according to the command for changing the display mode of the second desktop, wherein the second attribute adjustment function includes the attribute of the display content of the second desktop which needs to be adjusted and a corresponding attribute value; and amending the attribute of the display contents of the second desktop according to the second attribute adjustment function.

The display content of the second desktop at least includes a background that can be amended. The display adjustment module is used to adjust the attribute of the display content of the second desktop, which particularly includes: improving the transparency of the background of the second desktop, or switching the background of the second desktop into a transparent background, so that the content of the first desktop is visible via the background of the second desktop.

The display content of the second desktop further includes: icons, texts, pictures, videos played in the window, or at least one of them; and the display adjustment module is further used to adjust the attribute of the display content of the second desktop, which includes: improving the brightness of the icons, improving the brightness of the texts, changing the color of the texts, changing the color of the icons or adding a bright outline border at the perimeter of the icons.

Preferably, the display adjustment module, after acquiring the launching command for starting the second desktop, is further used to adjust the display mode of the first desktop, and display the first desktop according to the adjusted display mode. Adjusting the display mode of the first desktop and displaying the first desktop according to the adjusted display mode particularly includes: generating a command for changing the display mode of the first desktop according to the command for starting the second desktop; launching a first attribute adjustment function according to the command for changing the display mode of the first desktop, wherein the first attribute adjustment function includes the attribute of the display content of the first desktop and a corresponding attribute value; and adjusting the attribute of the display content of the first desktop according to the first attribute adjustment function.

The display content of the first desktop includes: videos and/or textsr, wherein the sound of the video is synchronously played when the video is played. The display adjustment module is particularly used to adjust the attribute of the display content of the first desktop, which includes: reducing the brightness of the display content of the first desktop, and/or, reducing the sound volume of the video played in the first desktop.

Preferably, the desktop display device of the present application may further include: a priority setting module used to, when the first desktop and the second desktop are displayed at the same time, set the second desktop to have a higher priority for acquiring commands.

The desktop display device provided by the embodiment of the present application may be independently disposed outside a TV or other display device, so that the first desktop and the second desktop are displayed in the same window, and makes the contents in the two desktops to be both displayed in full screen. The user may see the contents of the two desktops at the same time via one window other than in the form of parallel desktops, so that each desktop can display the contents respectively to the maximum extent in one window, thus the viewing experience of the user is improved.

The embodiment of the present application further provides a smart TV, which includes the foregoing device, so that each of the multiple desktops can display the contents respectively to the maximum extent in one window, thus the viewing experience of the user is improved.

It should be noted that, the terms "include", "comprise" or any variation thereof herein refer to "include but not limited to". Therefore, in the context of a process, method, object or device that includes a series of elements, the process, method, object or device not only includes such elements, but also includes other elements not specified expressly, or may include inherent elements of the process, method, object or device. Unless otherwise specified, in the context of "include a ...", the process, method, object or device that includes or comprises the specified elements may also include other identical elements.

In several embodiments of the present application, it should be understood that the disclosed device and method may be implemented in other ways. For example, the device embodiments described above are only exemplary.

The modules described may or may not be physically separated from each other, and the parts shown as modules may be one or more physical units, that is, the parts may be located at the same place, and may also be distributed to multiple different places. A part or all of the units may be selected according to an actual requirement to achieve the objectives of the solutions in the embodiments. In addition, function units in the embodiments of the present application may be integrated into a processing unit, or each unit exists singly and physically, or two or more units are integrated in one unit. The foregoing integrated unit may either be fulfilled by using a hardware form, or be fulfilled by using a software functional module form. If the integrated unit is implemented in the form of a software function unit and is sold or used as an independent product, it may be stored in a readable storage medium. Based on such understanding, the technical solutions of the present application essentially, or the part contributing to the prior art, or all or a part of the technical solutions may be implemented in the form of a software product. The software product is stored in a storage medium and includes several instructions for instructing a device (which may be a singlechip, a chip and so on) or a processor (processor) to execute all or a part of steps of the methods described in the embodiments of the present application. While the abovementioned storage medium includes: any medium that is capable of storing program codes, such as a USB drive, a mobile hard disk drive, a read-only memory (ROM, Read-Only Memory), a random access memory (RAM, Random Access Memory), a magnetic disk, or an optical disk.

It should be illustrated that the above-mentioned descriptions are only partial preferred embodiments of the technical solutions of the present application rather than all embodiments, which are used to help those skilled in the art understand or practice the present application. General principles defined herein can be embodied in other embodiments without departing from the spirit or scope of the present application. Therefore, those skilled in the art may figure out various apparent modifications and polishing without departing from the principle of the present application and without going through creative efforts based on the above embodiments. All other embodiments obtained from these modifications and polishing can be applied to the technical solutions of the present application, which do not affect the implementation of the present application, and shall all fall within the protection scope of the present application. Accordingly, the present application will not be limited to these embodiments shown herein, but is to be accorded with the widest scope consistent with the principles and novel features disclosed herein.

The present application is described in details above, and specific examples are applied herein to explain the principles and embodiments of the present application. The above description of embodiments is only intended to help understand the method and the core concept of the present application. Meanwhile, for those skilled in the art, modifications may be made to detailed embodiments and application scope of the present application according to the concept of the present application. In conclusion, the contents of the description cannot be appreciated as a limitation to the present application.

### Industrial Applicability

It can be seen from the above technical solutions that in the desktop display method provided by the present application, the launching command of the second desktop is acquired in the case that the first desktop continuously displays contents, the display mode of the second desktop is adjusted, and then the second desktop is displayed according to the adjusted display mode. This manner makes the first desktop and the second desktop to be displayed in the same window, and the contents of the two desktops are displayed at the same time, so that each desktop can display the contents respectively to the maximum extent in one window, and the user may view the contents of the two desktops at the same time via one window other than in the form of parallel desktops, thereby improving the viewing experience an perception of the user.

## Claims

1. A desktop display method, **characterized in that** the method is applied to a smart TV, wherein the smart TV comprises a first desktop and a second desktop, and in the case that the first desktop continuously displays contents, the method comprises:
acquiring a launching command of the second desktop;
adjusting a display mode of the second desktop and displaying the second desktop according to the adjusted display mode, so that the second desktop is displayed above the first desktop in a manner of a floating layer, and the first desktop and the second desktop are displayed in a same window.

2. The method according to claim 1, **characterized in that** the method, after acquiring the command for starting the second desktop, further comprises:
determining that the first desktop and the second desktop are desktops that can be displayed in the same window; and
generating a command for changing the display mode of the second desktop.

3. The method according to claim 2, **characterized in that** adjusting the display mode of the second desktop comprises:
adjusting the display mode of the second desktop according to the command for changing the display mode of the second desktop, which comprises:
activating a second attribute adjustment function according to the command for changing the display mode of the second desktop, wherein the second attribute adjustment function comprises an attribute of display contents of the second desktop which needs to be adjusted and a corresponding attribute value; and
amending the attribute of the display contents of the second desktop according to the second attribute adjustment function.

4. The method according to claim 3, **characterized in that** the display contents of the second desktop at least comprise a background that may be amended; and
adjusting the attribute of the display contents of the second desktop comprises: improving the transparency of the background of the second desktop, or switching the background of the second desktop into a transparent background, so that content of the first desktop is visible via the background of the second desktop.

5. The method according to claim 3, **characterized in that** the display contents of the second desktop further comprise: icons, texts, pictures, videos played in the window, or any one or more than one kind of them; and
adjusting the attribute of the display contents of the second desktop comprises: improving the brightness of the icons, improving the brightness of the texts, changing the color of the texts, changing the color of the icons and/or adding a bright outline border at the perimeter of the icons.

6. The method according to claim 1, **characterized in that** the method, after acquiring the launching command of the second desktop, further comprises:
adjusting a display mode of the first desktop and displaying the first desktop according to the adjusted display mode, which particularly comprises:
generating a command for changing the display mode of the first desktop according to the command for starting the second desktop;
activating a first attribute adjustment function according to the command for changing the display mode of the first desktop, wherein the first attribute adjustment function comprises an attribute of display contents of the first desktop and a corresponding attribute value; and
adjusting the attribute of the display contents of the first desktop according to the first attribute adjustment function.

7. The method according to claim 6, **characterized in that** the display contents of the first desktop comprise: videos and/or texts, wherein the sound of the video is synchronously played when the video is played; and
adjusting the attribute of the display contents of the first desktop comprises: reducing the brightness of the display contents of the first desktop, and/or, reducing the sound volume of a video played in the first desktop.

8. The method according to claim 1, **characterized in that** the first desktop and/or the second desktop is displayed in full screen.

9. A computer-readable storage medium recording a program configured to execute the desktop display method according to any one of claims 1 to 8.

10. A desktop display device, **characterized in that** the device is applied to a smart TV, wherein the smart TV comprises at least two desktops, and in the case that a first desktop continuously displays contents, the device comprises:
a command acquisition module configured to acquire a launching command of a second desktop;
a display adjustment module configured to adjust a display mode of the second desktop and display the second desktop according to the adjusted display mode, so that the second desktop is displayed above the first desktop in a manner of a floating layer, and the first desktop and the second desktop are displayed in a same window.

11. The device according to claim 10, **characterized in that** the device further comprises: a desktop determination module configured to, after the command acquisition module acquires the launching command of the second desktop, determine that the first desktop and the second desktop are desktops that can be displayed in the same window, and generate a command for changing the display mode of the second desktop.

12. The device according to claim 11, **characterized in that** adjusting the display mode of the second desktop by the display adjustment module particularly comprises: adjusting the display mode of the second desktop according to the command for changing the display mode of the second desktop, which particularly comprises:
activating a second attribute adjustment function according to the command for changing the display mode of the second desktop, wherein the second attribute adjustment function comprises an attribute of display contents of the second desktop which needs to be adjusted and a corresponding attribute value; and
amending the attribute of the display contents of the second desktop according to the second attribute adjustment function.

13. The device according to claim 12, **characterized in that** the display content of the second desktop at least comprises a background that can be amended, and the display adjustment module is configured to adjust the attribute of the display contents of the second desktop, which particularly comprises:
improving the transparency of the background of the second desktop, or switching the background of the second desktop into a transparent background, so that content of the first desktop is visible via the background of the second desktop.

14. The device according to claim 12, **characterized in that** display contents of the second desktop further comprise: icons, text, pictures, videos played in the window, or at least one of them; and
the display adjustment module is further configured to adjust the attribute of the display contents of the second desktop, which particularly comprises: improving the brightness of the icons, improving the brightness of the texts, changing the color of the texts, changing the color of the icons or adding a bright outline border at the perimeter of the icons.

15. The device according to claim 10, **characterized in that** the display adjustment module, after the launching command of the second desktop is acquired, is further configured to adjust a display mode of the first desktop, and display the first desktop according to the adjusted display mode, wherein:
adjusting the display mode of the first desktop and displaying the first desktop according to the adjusted display mode particularly comprise:
generating a command for changing the display mode of the first desktop according to the launching command of the second desktop;
activating a first attribute adjustment function according to the command for changing the display mode of the first desktop, the first attribute adjustment function comprising an attribute of display contents of the first desktop and a corresponding attribute value; and
adjusting the attribute of the display contents of the first desktop according to the first attribute adjustment function.

16. The device according to claim 15, **characterized in that** the display contents of the first desktop comprise: videos and/or characters, wherein the sound of the video is synchronously played when the video is played; and
the display adjustment module is configured to adjust the attribute of the display contents of the first desktop, which particularly comprises: reducing the brightness of the display contents of the first desktop and/or reducing a sound volume played in the first desktop.

17. The device according to claim 10, **characterized in that** the first desktop and/or the second desktop is displayed in full screen.

18. A smart TV, **characterized by**, comprising the device according to any one of claims 10 to 17.
